Europäisches Patentamt

European Patent Office

Office européen des brevets

(19)

(11) Numéro de publication : **0 402 265 B1**

# (12) FASCICULE DE BREVET EUROPEEN

(45) Date de publication du fascicule du brevet :
**01.03.95 Bulletin 95/09**

(51) Int. Cl.⁶ : **H01M 10/34,** H01M 10/18, H01M 4/68, H01M 4/14

(21) Numéro de dépôt : **90401559.1**

(22) Date de dépôt : **07.06.90**

(54) **Batterie d'accumulateurs au plomb étanche, à électrodes bipolaires.**

(30) Priorité : **08.06.89 FR 8907605**

(43) Date de publication de la demande :
**12.12.90 Bulletin 90/50**

(45) Mention de la délivrance du brevet :
**01.03.95 Bulletin 95/09**

(84) Etats contractants désignés :
**AT BE CH DE DK ES FR GB GR IT LI LU NL SE**

(56) Documents cités :
**WO-A-85/05738
WO-A-87/04011
DE-A- 2 524 653
GB-A- 281 018
US-A- 3 141 795
US-A- 4 178 216
US-A- 4 275 130**

(73) Titulaire : **COMPAGNIE EUROPEENNE D'ACCUMULATEURS Société anonyme dite:
18, Quai de Clichy
F-92111 Clichy Cedex (FR)**

(72) Inventeur : **Pompon, Jean-Paul
15, avenue Robespierre
F-94400 Vitry-sur-Seine (FR)**

(74) Mandataire : **Leszczynski, André et al
CABINET NONY & CIE.
29 rue Cambacérès
F-75008 Paris (FR)**

EP 0 402 265 B1

## Description

La présente invention concerne une batterie d'accumulateurs au plomb étanche à électrodes bipolaires.

Les batteries d'accumulateurs, dans leur grande majorité, sont faites d'éléments de tension unitaire constitués de plusieurs plaques positives et négatives empilées alternativement et regroupées électriquement par polarité. Le courant généré à la surface des électrodes est conduit vers le haut des plaques qui sont connectées en parallèle par des pièces métalliques de forte section. Les accumulateurs sont ensuite mis en série par des connexions extérieures ou traversant les parois. Les compartiments de bac dans lesquels sont placés les accumulateurs doivent être étanches pour ne pas permettre de jonction électrolytique car il s'ensuivrait des court-circuits qui auto-déchargeraient les accumulateurs concernés et les endommageraient.

Cette technologie est particulièrement adaptée aux assemblages de forte capacité et de faible tension totale ; elle évite l'utilisation d'électrodes de trop grande taille qui seraient encombrantes. Une variante de cet assemblage est l'accumulateur spiralé qui est généralement réservé aux faibles capacités pour des tensions unitaires.

Lorsque, dans un volume donné, on veut augmenter la tension totale, il faut multiplier le nombre d'éléments d'accumulateurs et donc diminuer la taille de chacun d'eux en réduisant le nombre d'électrodes de chaque polarité, jusqu'à descendre à des éléments ne comportant qu'une électrode positive et une électrode négative. Cet assemblage n'est généralement plus optimum. La place perdue croît ainsi que le nombre de connexions et le coût.

Le brevet anglais GB-A-2.158.285 décrit une batterie d'accumulateurs de ce type qui a l'inconvénient de nécessiter la réalisation d'une étanchéité complexe entre un grand nombre de compartiments.

Dans la batterie décrite dans le brevet français FR-A.2.200.642, chaque accumulateur ne contient qu'un couple d'électrodes. L'électrode négative de l'accumulateur de rang N est connectée à travers la paroi, et sur une courte distance, à l'électrode positive de l'accumulateur de rang N + 1. Cette technologie est également complexe et nécessite aussi des étanchéités délicates entre accumulateurs. Comme dans les montages traditionnels, les grilles doivent collecter et conduire tout le courant vers l'accumulateur suivant. Ce montage est quelquefois dénommé "Bipolaire" car les électrodes sont constituées d'une partie positive et d'une partie négative qui peuvent être fabriquées simultanément.

Le brevet américain US-A-4.539.268 décrit une batterie étanche avec un montage d'électrodes bipolaires de type Volta enfermé dans un bac fermé par un couvercle muni d'une soupape.

Les accumulateurs qui ne comprennent qu'un seul couple d'électrodes, sont empilés les uns contre les autres avec interposition d'une feuille en titane électroniquement conductrice. Cette feuille assure la collection du courant et son transfert de l'accumulateur de rang N vers l'accumulateur de rang N+1 sur une très courte distance. Cette technologie est appelée "Bipolaire" car le composant de base que l'on fabrique est une "plaque" constituée d'une feuille collectrice sur laquelle on vient placer d'un côté de la matière négative et de l'autre côté de la matière active positive. Ces plaques sont alors empilées avec interposition d'un séparateur.

Une telle batterie ne peut fonctionner longtemps car les feuilles de titane se recouvrent très rapidement d'une couche de passivation qui empêche la conduction. En outre ce brevet ne donne pas de solution au problème de l'étanchéité entre les accumulateurs.

La présente invention a pour but de réaliser une batterie d'accumulateurs au plomb étanche à électrodes bipolaires, dont la structure soit aisément réalisable industriellement, et où l'étanchéité entre les accumulateurs soit tout à fait assurée.

La présente invention a pour objet une batterie d'accumulateurs au plomb étanche comprenant, dans un bac fermé par un couvercle muni d'une soupape et de deux bornes de polarités opposées, un empilement d'électrodes bipolaires avec des séparateurs interposés, un collecteur positif et un collecteur négatif terminaux connectés respectivement auxdites bornes, chaque électrode bipolaire comprenant un collecteur de courant en forme de feuille munie sur ses faces respectivement d'une couche de matière active positive et d'une couche de matière active négative, batterie caractérisée par le fait qu'elle comprend une pluralité de cadres contenant chacun intérieurement un séparateur poreux et très mouillable, par exemple en fibres de verre, lesdits cadres servant d'entretoises pour lesdits collecteurs qui s'y appliquent au niveau de leurs bords exempts de matière active, les surfaces périphériques desdits cadres et les bords des collecteurs les dépassant étant noyés dans une mousse plastique adhérente et à pores fermés faisant étanchéité entre les accumulateurs, chaque cadre étant muni sur sa périphérie d'une tubulure sortant de ladite mousse pour permettre l'introduction d'électrolyte vers ledit séparateur correspondant.

Les cadres sont de préférence en matière plastique injectée. Le bac est de préférence en polypropylène éventuellement chargé, par exemple de talc, avec des parois externes nervurées pour résister à la pression.

Selon un mode de réalisation préférentiel, ledit collecteur de courant est multicouches. Il comprend une feuille centrale en matériau plastique conducteur, munie sur sa face destinée à recevoir la matière active négative d'un film de plomb doux adhérent, et sur son autre face d'un film d'alliage de plomb.

L'épaisseur de ladite feuille centrale est comprise entre 0,05 mm et 0,5 mm.

Ledit matériau plastique conducteur est choisi parmi un polypropylène chargé de graphite, présentant une résistivité inférieure à 10 ohm.cm, un polyéthylène chargé, un polychlorure de vinyle chargé, ou tout matériau résistant à l'acide sulfurique et que l'on puisse charger pour le rendre conducteur. le graphite et les charbons sont les charges préférentielles en raison de leur surtension de dégagement gazeux.

Selon un autre mode de réalisation, ledit matériau plastique conducteur est choisi parmi les polymères conducteurs tels que les polypyrols, les polythiophènes, les polyanilines.

L'épaisseur dudit film de plomb doux est comprise entre 0,05 mm et 0,5 mm. Il peut être obtenu par dépôt électrolytique, ou il peut être formé d'une feuille laminée non poreuse. L'adhérence de cette feuille à ladite feuille centrale peut être obtenue par exemple par colaminage à chaud ou par collage à l'aide d'une colle à base d'un polymère conducteur analogue à ceux qui ont été mentionnés ci-dessus.

L'épaisseur dudit film d'alliage de plomb est comprise entre 0,1 mm et 1 mm.

Cet alliage est de préférence un alliage contenant du plomb, du calcium et de l'étain ; il est éventuellement dopé d'additifs et travaillé sur le plan métallurgique pour renforcer sa tenue à la corrosion. Il est rendu adhérent à ladite feuille centrale de la même manière que ledit film de plomb doux.

Selon un mode de réalisation préférentiel, lesdites matières actives sont réalisées en forme de feuilles rectangulaires de dimensions un peu inférieures à celles de leur collecteur et elles sont plaquées de part et d'autre de ce dernier.

L'épaisseur de ces feuilles est comprise entre 0,5 mm et 3 mm. Les matières actives peuvent contenir un liant, tel qu'un latex de PTFE ou contenir un support en papier fin et poreux.

Ladite mousse plastique assurant l'étanchétié est choisie en un matériau résistant à l'acide sulfurique, par exemple en polyuréthane.

La présente invention a également pour objet un procédé de montage de la batterie d'accumulateurs au plomb étanche qui vient d'être définie.

Selon ce procédé, on empile lesdites électrodes bipolaires en interposant entre deux collecteurs successifs un cadre muni d'un séparateur et présentant sur sa périphérie une tubulure obturée, on dispose lesdits collecteurs positif et négatif terminaux avec leurs sorties de courant, on serre l'empilage ainsi obtenu dans un gabarit et on injecte ladite mousse plastique, on découpe les extrémités des tubulures des cadres dépassant ladite mousse, on remplit les accumulateurs en électrolyte au niveau desdites tubulures par aspiration sous vide, on introduit l'ensemble dans le bac que l'on ferme avec le couvercle par thermocompression, et on réalise lesdites bornes.

Pour réaliser lesdites électrodes bipolaire, on peut selon une première variante déposer la pâte active après malaxage en couche régulière sur un papier fin et poreux, découper un rectangle que l'on puisse manipuler et l'appliquer sur une face du collecteur central. Selon une seconde variante, on introduit dans le malaxeur contenant les différents constituants de la pâte une faible quantité de latex de PTFE qui donne des fibrilles et rend la pâte extrudable ou manipulable ; on peut donc la mettre sous forme d'une bande continue que l'on peut découper en rectangles appliqués ensuite sur les collecteurs.

Il est préférable de réaliser une préoxydation du collecteur avant application des matières actives afin d'assurer un meilleur contact avec ce dernier.

D'autres caractéristiques et des avantages de la présente invention apparaîtront au cours de la description suivante de modes de réalisation donnés à titre illustratif mais nullement limitatif.

Dans le dessin annexé :
- La figure 1 est une vue partielle très schématique en coupe d'une batterie d'accumulateurs selon l'invention.
- La figure 2 est une vue agrandie d'un détail II de la figure 1.
- La figure 3 est une vue schématique en perspective éclatée d'un cadre associé à deux électrodes bipolaires selon l'invention.
- La figure 4 est une vue partielle schématique en perspective d'une variante de cadre selon l'invention.

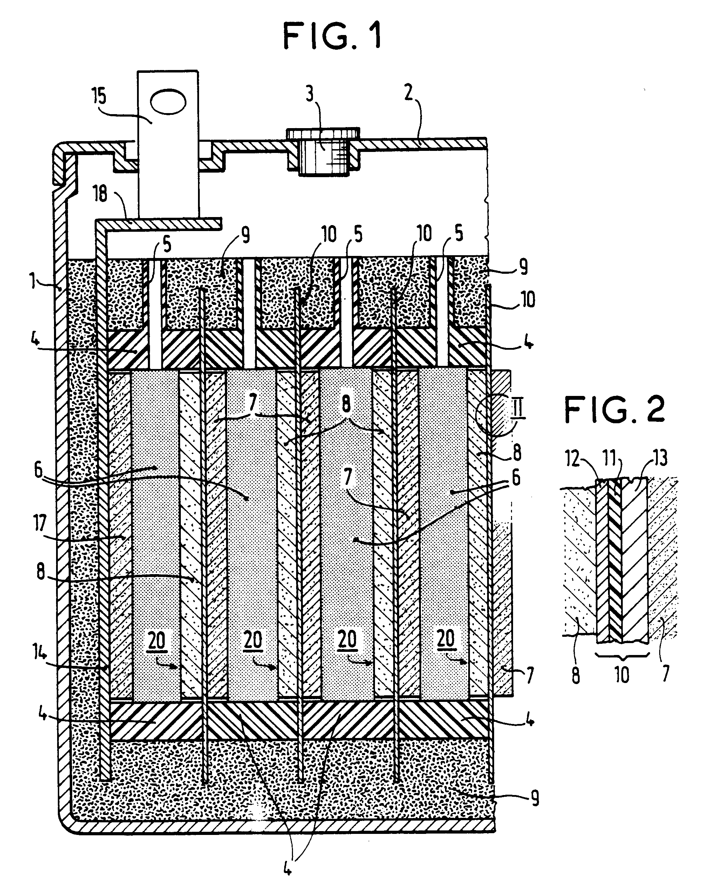

La batterie d'accumulateur au plomb étanche que l'on voit dans la figure 1 comprend un bac 1 fermé par un couvercle 2 muni d'une soupape 3.

Le bac et son couvercle sont en polypropylène chargé en talc pour diminuer leur porosité à la vapeur d'eau. Le bac 1 ne comporte pas de compartiments internes, mais il présente des nervures externes (non illustrées) qui lui confèrent une plus grande résistance à la pression. Le bac 1 est solidarisé au couvercle 2 par thermocompression.

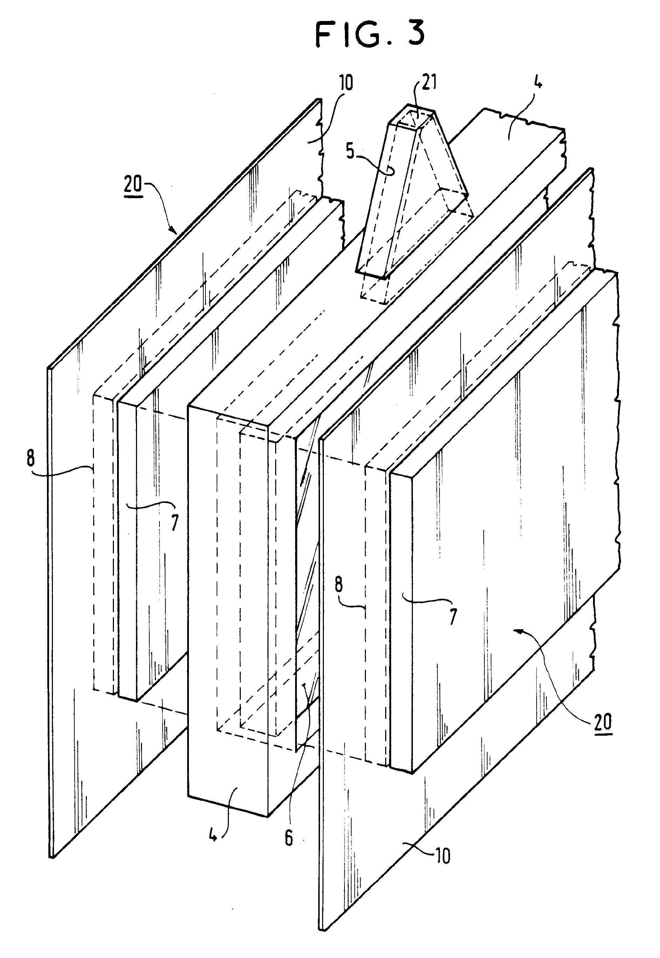

Le bac 1 contient un empilement d'électrodes bipolaires 20 orienté verticalement. Chaque électrode bipolaire 20 comporte un collecteur de courant 10 qui sera décrit en détail plus loin et qui est muni sur ses faces respectivement d'une couche de matière active positive 7 et d'une couche de matière active négative 8. Ces couches de matière active se présentent sous la forme de rectangles de dimensions légèrement inférieures à celles du collecteur sur lequel elles sont appliquées. Les bords libres des collecteurs 10 viennent s'appliquer sur des cadres 4 en matière plastique injectée, comme cela apparaît plus clairement dans la figure 3. Le matériau des cadres doit présenter une certaine rigidité, il peut s'agir de polypropylène, de polyéthylène, d'ABS ou de PVC. Au centre de chaque cadre 4 vient se loger un séparateur 6 en fibres de verre destiné à retenir l'électrolyte des accumulateurs.

Sur un de ses bords chaque cadre présente une tubulure d'injection d'électrolyte 5, qui au moment du montage de l'empilement, comporte (voir figure 2) un opercule de fermeture 20, mais qui, dans le bac 1 est ouverte.

Les bords des collecteurs 10 dépassent les bords des cadres 4 et tout l'ensemble est noyé latéralement dans une mousse 9 résistant au milieu acide, adhérente au plomb et à pores fermés. Cette mousse, par exemple en polyuréthane, assure l'étanchéité entre les accumulateurs, ainsi qu'une certaine rigidité à l'ensemble.

Chaque collecteur 10, visible plus en détail dans la figure 2 comporte plusieurs couches.

La feuille centrale 11, d'épaisseur 0,1 mm., est une feuille de matériau plastique conducteur telle qu'un polypropylène chargé de graphite et présentant une résistivité inférieure à 10 ohm.cm. En cas de perforation accidentelle des autres couches du collecteur 10, cette feuille centrale 11 arrêterait tout passage d'électrolyte entre deux accumulateurs adjacents.

La couche 12 intermédiaire entre la feuille 11 et la matière active négative 8 est un film de plomb doux en forme d'un feuille laminée d'épaisseur 0,1 mm. Cette dernière est rendue adhérente à la feuille 11 par colaminage à chaud, ou par collage par une colle à base de polymère conducteur.

La couche 13 intermédiaire entre la feuille 11 et la matière active positive 7 est un film d'alliage de pomb (plomb-calcium-étain) d'épaisseur 0,2 mm, dopé d'additifs et travaillé sur le plan métallurgique pour renforcer sa résistance à la corrosion. Ce film est rendu adhérent à la feuille 11 de la même manière que la couche 12.

Les couches de matières actives 7 et 8 ont une composition analogue à celle des accumulateurs au plomb étanches classiques, mais elles contiennent en plus un peu de latex qui permet d'améliorer leur manipulation. Avant l'application de ces couches, il est préférable de préoxyder légèrement les couches 12 et 13 du collecteur 10.

Après murissage, les électrodes bipolaires 20 sont empilées avec interposition d'un cadre en matière plastique 4 au centre duquel vient se positionner un séparateur 6.

Après positionnement des plaques extrêmes 17 munies de collecteurs renforcés 14 et de sorties de courant 18, on serre l'empilage dans un gabarit permettant l'injection d'une mousse plastique 9.

Les extrémités 20 des dispositifs de remplissage 5 dépassant de la mousse 9 sont éliminées par découpe, puis les accumulateurs sont remplis de la quantité voulue d'électrolyte par aspiration sous vide.

La formation peut intervenir à ce stade, ou après positionnement du bloc ainsi constitué dans le bac 1 lui conférant la tenue mécanique et l'étanchéité globale. Le couvercle 2 soudé par thermocompression ne comprend qu'une seule soupape 3 pour l'ensemble de la batterie. Les sorties de fût 15 peuvent être des buselures à étanchéité renforcée ou des sorties à joint, conformément à des techniques de fabrication connues.

On a illustré dans la figure 1 un ensemble d'électrodes reliées en série ; mais on peut prévoir tout arrangement en parallèle d'une pluralité de groupes d'électrodes reliées en série.

Par ailleurs, comme il s'agit d'une batterie de type étanche, elle ne comporte pas d'électrolyte libre et les tubulures 5 ne servent qu'au remplissage initial en électrolyte.

La technologie selon l'invention qui est bien adaptée aux batteries de moyenne ou faible capacité et de tension élevée, présente, par ailleurs, les avantages suivants : d'une part diminution du poids de plomb des collecteurs puisque la transmission du courant s'effectue sur une très courte distance et à de faibles densités de courant, et d'autre part suppression totale des connexions entre accumulateurs. Les deux raisons précédentes entraînent un gain en tension par diminution de la chute ohmique et un gain en rendement car les densités de courant sont homogènes sur toute la plaque.

Si on considère tout d'abord les gains en plomb, on observe qu'ils sont dûs à trois facteurs : le gain sur les collecteurs, la suppression des connexions intermédiaires et le gain dû à l'augmentation des performances.

Si l'on considère une batterie actuelle de démarrage de 300A, 45Ah, 12 volts, elle contient en valeurs arrondies :

| | |
|---|---|
| – Poids de grille positive | 1300 g |
| – Poids de plomb dans la matière positive | 2160 g |
| – Poids de grille négative | 1300 g |
| – Poids de plomb dans la matière négative | 2160 g |
| – Poids de plomb dans les connexions | 700 g |
| Soit au total | 7620 g de plomb |

Pour une batterie selon l'invention de 150A, 22.5Ah et 24 Volts on aura :

| | |
|---|---|
| – Poids des collecteurs positifs | 700 g |
| – Poids de la grille positive extrême | 110 g |
| – Poids de plomb dans la matière positive | 2160 g |
| – Poids de collecteurs négatifs | 340 g |
| – Poids de la grille négative extrême | 110 g |
| – Poids de plomb dans la matière négative | 2160 g |
| – Poids de plomb dans les connexions | 100 g |
| Soit au total | 5680 g de plomb |

On obtient donc un gain minimum de 25 % du poids de plomb. Ce gain serait encore plus important si l'on effectuait la comparaison avec une batterie de 24 volts à structure traditionnelle.

L'autre gain de matière concerne celle du bac. Bien que les parois externes doivent être renforcées, le poids global doit diminuer en raison de la suppression des cloisons ; ce gain est encore plus significatif dans le cas des batteries de 24 Volts.

Le gain sur les performances électriques, c'est-à-dire l'augmentation des rendements des matières due à l'homogénéité des densités de courants, dépend essentiellement du régime il est de l'ordre de 5 % ; quant à la diminution de la chute ohmique due à la suppression des connexions, elle est évaluée à une valeur comprise entre 100 et 500 millivolts pour la totalité de la batterie de 24 Volts.

Des calculs analogues peuvent être faits pour les batteries stationnaires ; dans ce cas, l'intérêt principal semble résider dans la possibilité de réaliser des batteries de petites tailles et de tension élevée (48 Volts, 8 Ah), ce qui peut changer complètement l'architecture d'outils portables.

Bien entendu, l'invention n'est pas limitée aux modes de réalisation qui viennent d'être décrits.

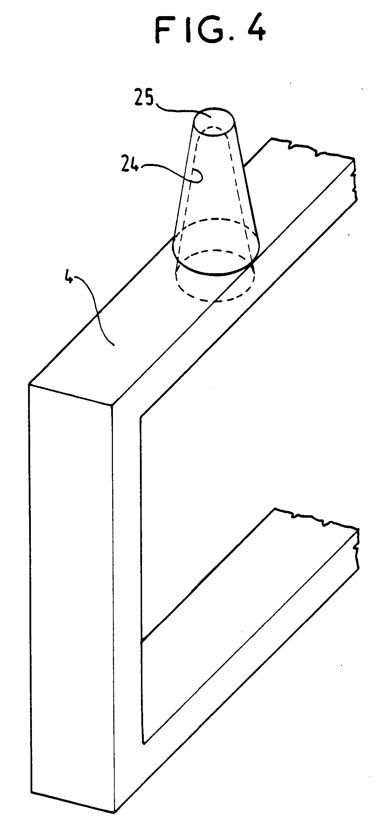

Ainsi on voit dans la figure 4 une variante de cadre 4 munie d'une tubulure tronçonique 24 avec son opercule de fermeture 25. Par ailleurs, on a représenté une batterie dont les électrodes bipolaires sont disposées en position verticale, mais il est possible d'envisager une disposition horizontale de l'empilement.

On pourra, sans sortir du cadre de l'invention, remplacer tout moyen par un moyen équivalent.

En particulier, on pourra remplacer le séparateur en fibres de verre par un espaceur microporeux. Dans ce cas l'acide sera additionné de silice pour qu'il se gélifie et s'immobilise après quelque temps dans la batterie.

**Revendications**

1. Batterie d'accumulateurs au plomb étanche comprenant, dans un bac fermé par un couvercle muni d'une soupape et de deux bornes de polarités opposées, un empilement d'électrodes bipolaires avec des séparateurs interposés, un collecteur positif et un collecteur négatif terminaux connectés respectivement auxdites bornes, chaque électrode bipolaire comprenant un collecteur de courant en forme de feuille munie sur ses faces respectivement d'une couche de matière active positive et d'une couche de matière active négative, batterie caractérisée par le fait qu'elle comprend une pluralité de cadres (4) contenant chacun intérieurement un séparateur (6) poreux et très mouillable, lesdits cadres (4) servant d'entretoises pour lesdits collecteurs (10) qui s'y appliquent au niveau de leurs bords exempts de matière active, les surfaces périphériques desdits cadres et les bords des collecteurs les dépassant étant noyés dans une mousse plastique (9) adhérente et à pores fermés faisant étanchéité entre les accumulateurs, chaque cadre étant muni sur sa périphérie d'une tubulure (5) sortant de ladite mousse pour permettre l'introduction d'électrolyte vers ledit séparateur (6) correspondant.

2. Batterie d'accumulateurs selon la revendication 1, caractérisée par le fait que lesdits cadres (4) sont en matière plastique injectée.

3. Batterie d'accumulateurs selon la revendication 1, caractérisée par le fait que ledit bac (1) est en polypropylène et que ses parois externes sont nervurées.

4. Batterie d'accumulateurs selon la revendication 1, caractérisée par le fait que lesdits collecteurs de courant (10) sont multicouches.

5. Batterie d'accumulateurs selon la revendication 4, caractérisée par le fait que chaque collecteur de courant comprend une feuille centrale (11) en matériau plastique conducteur munie sur sa face destinée à recevoir la matière active négative (8) d'un film (12) de plomb doux adhérent, et sur son autre face d'un film (13) d'alliage de plomb.

6. Batterie d'accumulateurs selon la revendication 5, caractérisée par le fait que l'épaisseur de ladite feuille centrale (11) est comprise entre 0,05 mm et 0,5 mm.

7. Batterie d'accumulateurs selon l'une des revendications 4 et 5, caractérisée par le fait que ledit matériau plastique conducteur est choisi parmi un polypropylène chargé de graphite, présentant une résistivité inférieure à 10 ohm.cm, un polyéthylène chargé, un polychlorure de vinyle chargé, ou tout matériau résistant à l'acide sulfurique et que l'on puisse charger pour le rendre conducteur.

8. Batterie d'accumulateurs selon l'une des revendications 4 et 5, caractérisée par le fait que ledit matériau plastique conducteur est choisi parmi les polymères conducteurs tels que les polypyrols, les polythiophènes, les polyanilines.

9. Batterie d'accumulateurs selon la revendication 5, caractérisée par le fait que l'épaisseur dudit film de plomb doux (12) est comprise entre 0,05 mm et 0,5 mm.

10. Batterie d'accumulateurs selon la revendication 9, caractérisée par le fait que ledit film de plomb doux est une feuille de plomb laminée non poreuse adhérente à ladite feuille centrale.

11. Batterie d'accumulateurs selon la revendication 5, caractérisée par le fait que l'épaisseur dudit film (13) d'alliage de plomb est comprise entre 0,1 mm et 1 mm.

12. Batterie d'accumulateurs selon la revendication 11, caractérisée par le fait que ledit alliage contient du plomb, du calcium et de l'étain.

13. Batterie d'accumulateurs selon l'une des revendications précédentes, caractérisée par le fait que lesdites matières actives se présentent sous la forme de rectangle de pâte de dimensions un peu inférieures à celles desdits collecteurs et d'épaisseur comprise entre 0,5 mm et 3 mm.

14. Batterie d'accumulateurs selon la revendication 13, caractérisée par le fait que lesdites matières actives contiennent du latex.

15. Batterie d'accumulateurs selon la revendication 13, caractérisée par le fait que lesdites matières actives sont appliquées sur un support en papier fin et poreux.

16. Procédé de fabrication d'une batterie d'accumulateurs selon la revendication 1, caractérisé par le fait que l'on empile lesdites électrodes bipolaires (20) en interposant entre deux collecteurs successifs (10) un cadre (4) muni d'un séparateur (6) et présentant sur sa périphérie une tubulure obturée (5), on dispose lesdits collecteurs positif et négatif terminaux avec leurs sorties de courant, on serre l'empilage ainsi obtenu dans un gabarit et on injecte ladite mousse plastique (9), on découpe les extrémités des tubulures des cadres dépassant ladite mousse, on remplit les accumulateurs en électrolyte au niveau desdites tubulures par aspiration sous vide, on introduit l'ensemble dans le bac que l'on ferme avec le couvercle par thermocompression, et on réalise lesdites bornes.

17. Procédé de fabrication selon la revendication 16, caractérisé par le fait que, pour réaliser lesdites électrodes bipolaires (20), on dépose la pâte active après malaxage en couche régulière sur un papier fin et poreux, on découpe un rectangle que l'on puisse manipuler et on l'applique sur une face d'un collecteur.

18. Procédé de fabrication selon la revendication 16, caractérisé par le fait que, pour réaliser lesdites électrodes bipolaires, on introduit pendant le malaxage dans la pâte une petite quantité de latex pour consolider cette pâte, on la met sous forme d'une bande continue que l'on découpe et que l'on applique sur une face d'un collecteur.

19. Procédé de fabrication selon l'une des revendications 16 à 18, caractérisé par le fait que, avant l'application des matières actives sur les faces d'un collecteur, on préoxyde lesdites faces.

20. Procédé de fabrication selon l'une des revendications précédentes, caractérisé par le fait qu'une substance gélifiante est ajoutée audit électrolyte.

**Patentansprüche**

1. Dichte Bleiakkumulatorenbatterie, die in einem Gefäß, das mit einem ein Ventil und zwei Klemmen entgegengesetzter Polarität aufweisenden Deckel verschlossen ist, einen Stapel von bipolaren Elektroden mit zwischengefügten Separatoren und einen positiven und einen negativen Endkollektor enthält, der mit je einer der Klemmen verbunden ist, wobei jede bipolare Elektrode einen Stromkollektor in Form einer Folie aufweist, die auf ihren Außenseiten eine Schicht aus einem positiven bzw. negativen aktiven Material trägt, dadurch gekennzeichnet, daß die Batterie mehrere Rahmen (4) aufweist, die je im Inneren einen porösen und sehr leicht zu benetzenden Separator (6) enthalten und als Abstandshalter für die Kollektoren (10) dienen, die im Bereich ihrer kein aktives Material tragenden Ränder an den Rahmen anliegen, wobei die peripheren Oberflächen der Rahmen und die über diese hervorragenden Ränder der Kollektoren in einen haftenden Kunststoffschaum (9) mit geschlossenen Poren eingebettet sind, der die Dichtheit zwischen den Akkumulatoren herstellt, und wobei jeder Rahmen an seiner Peripherie einen aus dem Schaum hervortretenden Kanal (5) zum Einfüllen von Elektrolyt in den entsprechenden Separator (6) aufweist.

2. Akkumulatorbatterie nach Anspruch 1, dadurch gekennzeichnet, daß die Rahmen (4) aus einem Kunststoffmaterial in Spritzgußtechnik hergestellt sind.

3. Akkumulatorbatterie nach Anspruch 1, dadurch gekennzeichnet, daß das Gefäß (1) aus Polypropylen ist und außen mit Rippen versehen ist.

4. Akkumulatorbatterie nach Anspruch 1, dadurch gekennzeichnet, daß die Stromkollektoren (10) aus mehreren Schichten bestehen.

5. Akkumulatorbatterie nach Anspruch 4, dadurch gekennzeichnet, daß jeder Stromkollektor eine zentrale Folie (11) aus leitendem Kunststoff enthält, die auf ihrer Seite, die das negative aktive Material (8) tragen soll, eine Schicht (12) aus haftenden Weichblei sowie auf ihrer anderen Seite eine Schicht (13) aus einer Bleilegierung trägt.

6. Akkumulatorbatterie nach Anspruch 5, dadurch gekennzeichnet, daß die Dicke der zentralen Folie (11) zwischen 0,05 und 0,5 mm beträgt.

7. Akkumulatorbatterie nach einem der Ansprüche 4 und 5, dadurch gekennzeichnet, daß der leitende Kunststoff ausgewählt wird aus mit Graphit gemischtem Polypropylen, dessen spezifischer Widerstand kleiner als 10 Ωcm ist, aus mit Leitpartikeln gemischtem Polyäthylen, Polyvinylchlorid oder jedem anderen Material, das durch Schwefelsäure nicht angegriffen wird und das man mit Partikeln mischen kann, damit es leitend wird.

8. Akkumulatorbatterie nach einem der Ansprüche 4 und 5, dadurch gekennzeichnet, daß der leitende Kunststoff unter den leitenden Polymeren wie z.B. Polypyrol, Polythiophen, Polyanilin ausgewählt wird.

9. Akkumulatorbatterie nach Anspruch 5, dadurch gekennzeichnet, daß die Dicke der Schicht aus Weichblei (12) zwischen 0,05 und 0,5 mm beträgt.

**10.** Akkumulatorbatterie nach Anspruch 9, dadurch gekennzeichnet, daß die Folie aus Weichblei eine nicht-poröse und an der zentralen Folie haftende gewalzte Bleifolie ist.

**11.** Akkumulatorbatterie nach Anspruch 5, dadurch gekennzeichnet, daß kann die Dicke der Schicht (13) aus einer Bleilegierung zwischen 0,1 und 1 mm beträgt.

**12.** Akkumulatorbatterie nach Anspruch 11, dadurch gekennzeichnet, daß die Legierung Blei, Kalzium und Zinn enthält.

**13.** Akkumulatorbatterie nach einem der vorhergehende Ansprüche, dadurch gekennzeichnet, daß die aktiven Materialien in Form von rechteckigen Platten aus Paste mit Abmessungen vorliegen, die etwas geringer als die der Kollektoren sind, wobei die Dicke zwischen 0,5 mm und 3 mm beträgt.

**14.** Akkumulatorbatterie nach Anspruch 13, dadurch gekennzeichnet, daß die aktiven Materialien Latex enthalten.

**15.** Akkumulatorbatterie nach Anspruch 13, dadurch gekennzeichnet, daß die aktiven Materialien auf einen Träger aus feinem porösem Papier aufgebracht sind.

**16.** Verfahren zur Herstellung einer Akkumulatorbatterie nach Anspruch 1, dadurch gekennzeichnet, daß die bipolaren Elektroden (20) unter Zwischenfügung eines Rahmens (4), der einen Separator (6) besitzt und auf seiner Peripherie einen verschlossenen Kanal (5) enthält, zwischen zwei aufeinanderfolgenden Kollektoren (10) stapelt, daß dann die positiven und negativen Endkollektoren mit ihren Stromausgängen aufgelegt werden, daß dann der so erhaltene Stapel in ein Gestell eingespannt wird und der Kunststoffschaum (9) injiziert wird, daß dann die aus dem Schaum hervorragenden Enden der Kanäle der Rahmen abgeschnitten werden, dann die Akkumulatoren mit Elektrolyt durch die Kanäle mittels Ansaugens durch Unterdruck gefüllt werden, dann das Ganze in das Gefäß eingesetzt wird, welches dann mit dem Deckel durch Thermokompression verschlossen wird, und daß schließlich die Klemmen hergestellt werden.

**17.** Herstellungsverfahren nach Anspruch 16, dadurch gekennzeichnet, daß zur Herstellung der bipolaren Elektroden (20) die aktive Paste nach dem Kneten in einer regelmäßigen Schicht auf ein feines und poröses Papier aufgebracht wird, daß dann ein Rechteck ausgeschnitten wird, das man handhaben kann, und daß dann dieses Rechteck auf eine Seite eines Kollektors aufgebracht wird.

**18.** Herstellungsverfahren nach Anspruch 16, dadurch gekennzeichnet, daß zur Herstellung der bipolaren Elektroden während des Knetens in die Paste eine geringe Menge von Latex eingebracht wird, um diese Paste zu konsolidieren, und daß dann die Paste zu einem kontinuierlichen Band geformt wird, das zerschnitten wird und dann auf eine Seite eines Kollektors aufgebracht wird.

**19.** Herstellungsverfahren nach einem der Ansprüche 16 bis 18, dadurch gekennzeichnet, daß vor dem Aufbringen der aktiven Materialien auf die Seiten eines Kollektors dessen Seitenflächen oxidiert werden.

**20.** Herstellungsverfahren nach einem der vorhergehenden Ansprüche, dadurch gekennzeichnet, daß eine Geliersubstanz dem Elektrolyten zugefügt wird.

## Claims

**1.** Sealed lead accumulator battery with bipolar electrodes, comprising, in a container closed by a lid equipped with valve and two terminals of opposite polarity, a stack of bipolar electrodes with interposed separators, a terminal positive collector and a terminal negative collector connected respectively to said terminals, each bipolar electrode comprising a current collector in the form of a sheet provided on its faces, respectively, with a film of positive active material and a film of negative active material, this battery being characterized by the fact that it comprises a plurality of frames (4) each containing internally a porous and highly wettable separator (6), said frames (4) serving as spacers for said collectors (10), which bear against them at the level of their edges free from active material, the peripheral surfaces of the frames and the edges of the collectors projecting beyond them being embedded in a closed-pore, adhesive plastic foam (9) forming a seal between the accumulators, each frame being equipped at its periphery with a pipe (5) projecting out through said foam to permit the introduction of electrolyte to the corresponding separator (6).

2. Accumulator battery according to Claim 1, characterised by the fact that said frames (4) are of injected plastics material.

3. Accumulator battery according to Claim 1, characterized by the fact that said container (1) is of polypropylene and that its external walls are ribbed.

4. Accumulator battery according to Claim 1, characterized by the fact that said current collectors (10) are multi-layer.

5. Accumulator battery according to Claim 4, characterized by the fact that each current collector comprises a central sheet (11) of conductive plastics material provided on its face intended for receiving the negative active material (8) with a film (12) of adhesive soft lead, and on its other face with a film (13) of lead alloy.

6. Accumulator battery according to Claim 5, characterized by the fact that the thickness of said central sheet (11) is between 0.05 mm and 0.5 mm.

7. Accumulator battery according to one of Claims 4 and 5, characterized by the fact that said conductive plastics material is chosen from among a polypropylene filled with graphite having a resistivity less than 10 ohm.cm, a filled polyethylene, a filled polyvinyl chloride, or any material resistant to sulphuric acid and which can be filled to make it conductive.

8. Accumulator battery according to one of Claims 4 and 5, characterized by the fact that said conductive plastics material is chosen from among the conductive polymers, such as the polypyrols, the polythiophenes, the polyanilines.

9. Accumulator battery according to Claim 5, characterized by the fact that the thickness of said film of soft lead (12) is between 0.05 mm and 0.5 mm.

10. Accumulator battery according to Claim 9, characterized by the fact that said film of soft lead is a film of non-porous rolled lead adhering to said central sheet.

11. Accumulator battery according to Claim 5, characterized by the fact that the thickness of said film (13) of lead alloy is from 0.1 mm to 1 mm.

12. Accumulator battery according to Claim 11, characterized by the fact that said alloy contains lead, calcium and tin.

13. Accumulator battery according to one of the preceding Claims, characterized by the fact that said active materials are present in the form of a rectangle of paste of dimensions slightly smaller than those of said collectors and of a thickness between 0.5 mm and 3 mm.

14. Accumulator battery according to Claim 13, characterized by the fact that said active materials contain latex.

15. Accumulator battery according to Claim 13, characterized by the fact that said active materials are applied onto a support of fine porous paper.

16. Method of making an accumulator battery according to Claim 1, characterized by the fact that said bipolar electrodes (20) are stacked by interposing, between two successive collectors (10), a frame (4) provided with a separator (6) and having, at its periphery, an obturated pipe (5), said positive and negative terminal collectors are disposed with their output terminals, the thus obtained stack is clamped in a jig and said plastics foam (9) is injected, the ends of the pipes of the frames projecting beyond said foam are cut off, the accumulators are filled with electrolyte at said pipes by suction under vacuum, the whole assembly is introduced into the container, which is closed with the cover by hot pressing, and said terminals are constructed.

17. Method of production according to Claim 16, characterized by the fact that, for forming said bipolar electrodes (20), the active paste is deposited after mixing in a uniform film onto a fine porous paper, a rectangle that can be handled is cut out and it is applied onto the face of a collector.

18. Method of production according to Claim 16, characterized by the fact that, for forming said bipolar electrodes, there is introduced into the paste, during mixing, a small quantity of latex for consolidating said paste, it is brought into the form of a continuous band, which is cut up and which is applied onto one face of a collector.

19. Method of production according to one of Claims 16 to 18, characterized by the fact that, before the application of the active materials onto the faces of a collector, said faces are preoxidized.

20. Method of production according to one of the preceding Claims, characterized by the fact that a gelling substance is added to said electrolyte.

# FIG. 1

# FIG. 2

# FIG. 3

# FIG. 4